Europäisches Patentamt

(19) European Patent Office

Office européen des brevets

(11) Publication number: **0 053 033**
**B1**

## (12) EUROPEAN PATENT SPECIFICATION

(45) Date of publication of patent specification: 05.03.86

(51) Int. Cl.⁴: **B 60 L 3/10**

(21) Application number: 81305533.2

(22) Date of filing: 24.11.81

(54) **Slip indicating system for a four-wheel drive vehicle.**

(30) Priority: 25.11.80 JP 166226/80

(43) Date of publication of application:
02.06.82 Bulletin 82/22

(45) Publication of the grant of the patent:
05.03.86 Bulletin 86/10

(84) Designated Contracting States:
CH DE FR GB LI SE

(56) References cited:
CH-A- 182 222
FR-A-1 416 111
GB-A- 882 383
GB-A-1 071 633
US-A-4 006 417
US-A-4 066 300

(73) Proprietor: FUJI JUKOGYO KABUSHIKI KAISHA
7-2 Nishishinjuku 1-chome Shinjuku-ku
Tokyo (JP)

(72) Inventor: Satoh, Tetsuo
58-39 Higashihoncho
Ohta-shi Gunma-Pref. (JP)
Inventor: Ohgami, Masaaki
2-5-10-203 Yahatacho
Musashino-shi Tokyo (JP)
Inventor: Ogata, Shoji
389 Takaracho
Ohta-shi Gunma-Pref. (JP)

(74) Representative: Kirk, Geoffrey Thomas et al
BATCHELLOR, KIRK & EYLES 2 Pear Tree Court
Farringdon Road
London EC1R 0DS (GB)

Courier Press, Leamington Spa, England.

## Description

The present invention relates to a four-wheel drive vehicle and more particularly to a system for indicating the slip of each driving wheel of the vehicle.

A four-wheel drive is valuable when travelling over a slippery road, such as a snow-covered or icy road. However, if any one of the four wheels slips on such a slippery road, it is difficult to get the vehicle into motion. The driver must get down from the vehicle and ascertain which of the wheels is slipping. The wheel-slip may than be stopped by changing the position of the passengers or load in the vehicle.

It is known from U.S. 4066300 to sense the speeds of each of the wheels of a 4-wheel drive vehicle and to use these sensed speeds in a comparison process. In U.S. 4066300, high and lowest wheel speeds are compared and if the difference exceeds a predetermined amount and output is provided.

The present invention seeks to provide a slip indicating system for a four-wheel drive vehicle which indicates automatically which wheel is slipping.

According to the present invention, a wheel slip indicating system for a four-wheel drive vehicle, comprising: a speed detector for each wheel for detecting the speed of the wheels individually, comparator means for producing outputs in accordance with detected speed differences, and switch units adapted to be controlled by those outputs, is characterised by a number of comparators for each driven wheel equal to the number of the further driven wheels, each comparator receiving the signal of the respective wheel and of one of the further wheels, a switch unit for each wheel adapted to be closed by the outputs of each of the respective comparators, and indicators adapted to be operated on closing of the switch units.

The invention will be more readily understood by way of example from the following description of a wheel-slip indicating system in accordance therewith, reference being made to the accompanying drawings, in which:

Figure 1 is a plan view of a four-wheel drive vehicle provided with the wheel-slip indicating system;

Figure 2 is a sectional view showing a wheel speed detector;

Figure 3 is a block diagram showing the indicating system; and

Figure 4 is an electric circuit used in the indicating system.

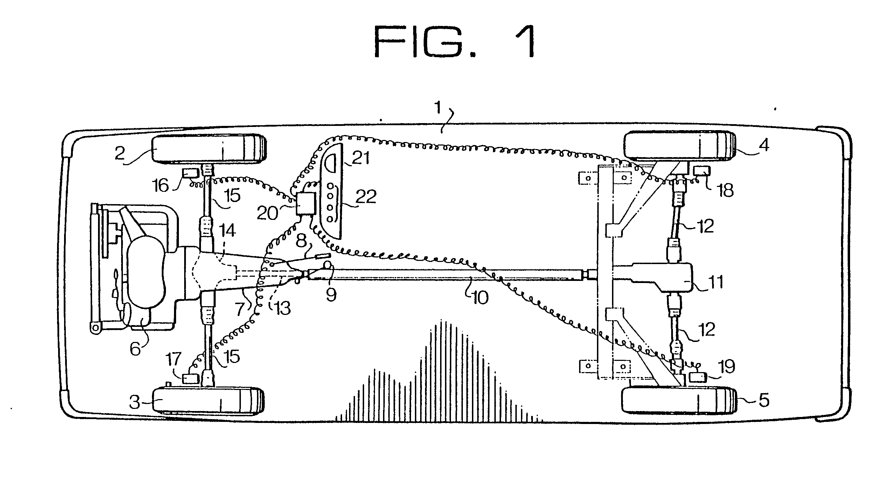

Referring to Figure 1, reference numeral 1 designates a body of a vehicle, 2 and 3 are front wheels and 4 and 5 are rear wheels. An engine 6 is front-mounted on the body 1 and transmits power to the front wheels through a transmission 7. By engaging a clutch in the transmission, power can be transmitted to both the front and rear wheels. Gear change is performed by operating a change speed lever 8. The clutch in the transmission 7 is engaged by operating a drive selection lever 9 to transmit the power additionally to the rear wheels 4, 5. The output of the transmission 7 is transmitted to the front wheels 2, 3 through a shaft 13, a front differential 14 and front axles 15, while the power transmission to the rear wheels 4, 5 comprises a propeller shaft 10 extending from the transmission 7, a rear differential 11 and rear axles 12.

In order to detect the rotational speed of the front and rear wheels 2, 3, front-wheel speed detectors 16, 17 are provided adjacent to axles 15 and rear wheel speed detectors 18, 19 are provided adjacent to axles 12. The output of each speed detector is connected to a judging circuit 20 the output of which is connected to an indicator represented by lamps 22 on an instrument panel 21 to indicate slippage of the respective wheels.

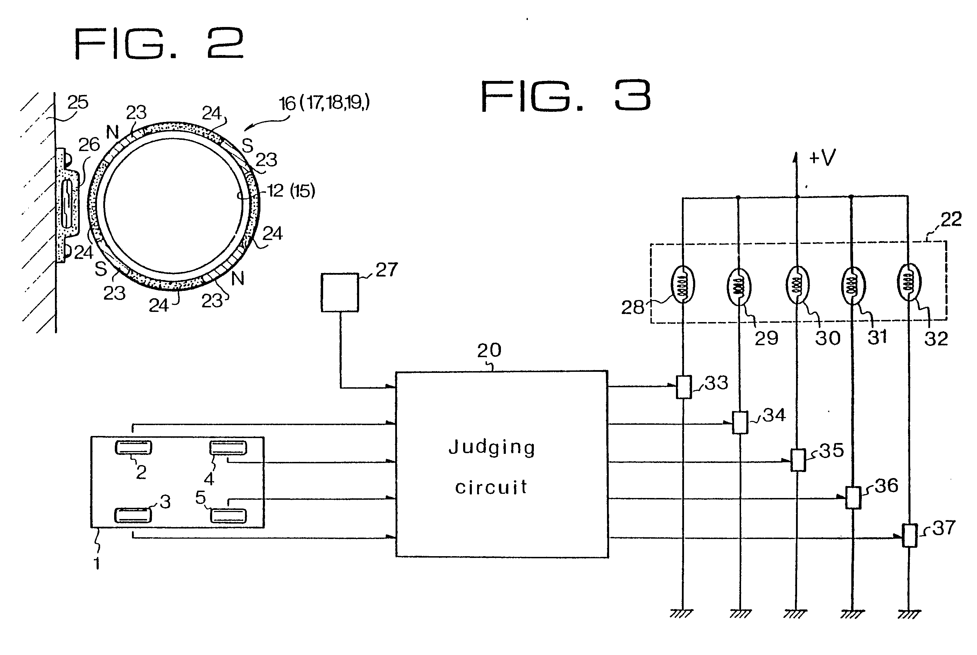

Figure 2 shows one of the speed detectors 16 to 19. As plurality of permanent magnets 23 are circumferentially secured on each axle 12 (or on each axle 15). Magnets 23 are separated from each other by synthetic resin 24 or other insulation secured on the axle. A reed switch 26 is provided on a support 25 formed on the body 1 and positioned in the vicinity of, but slightly spaced from, the magnets 23.

As shown in Figure 3, output signals from the wheel speed detectors are applied to the judging circuit 20. A four-wheel drive switch 27 is also connected with the judging circuit 20, that switch 27 being actuated by the selection lever 9 and turned on during four-wheel drive operation. The indicator 22 contains a slip indicating lamp 28, and slipping wheel indicating lamps 29, 30, 31, 32 corresponding to wheels 2, 4, 5, 3, respectively. The lamps 28 to 32 are connected in series with respective switch elements 33, 34, 35, 36, 37 which are connected with the control output of the judging circuit 20.

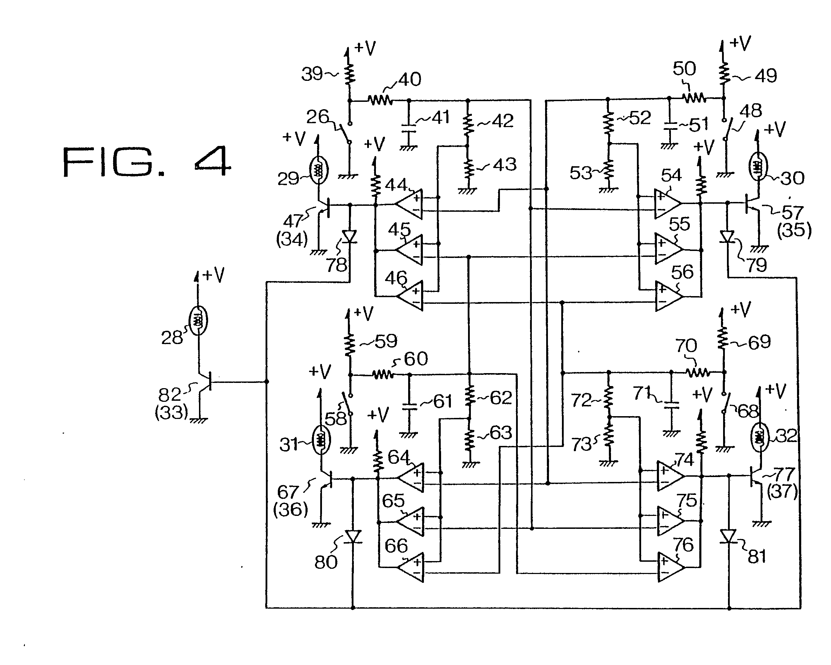

Figure 4 is a detailed electric circuit of the indicating system of Figure 3.

Positive electric voltage is applied through a resistor 39 to the reed switch 26 in the speed detector 16. The reed switch 26 is connected to an integrating circuit consisting of a resistor 40 and a capacitor 41, and the resistor 40 is connected to a voltage divider consisting of resistors 42 and 43. The divided .voltage is applied to non-inverting inputs of comparators 44, 45, 46 and the outputs of the comparators 44 to 46 are connected to the base of transistor 47 which corresponds to the switch element 34 in Figure 3. The emitter of the transistor 47 is grounded and the collector is connected to the slipping wheel indicating lamp 29. Those parts constitute a first slip indicating unit and relate to the front wheel 2. There are three similar units for the other three wheels: a second unit actuated by a reed switch 48 in the speed detector 17; a third unit actuated by a reed switch 58 in the speed detector 18; and a fourth unit actuated by a reed switch 68 in the speed detector 19. The voltage at the resistor 40 of the first unit is applied to comparators 54, 65, 75 of the other units; the voltage at a resistor 50 in the second unit is applied to comparators 44, 64, 74 of the other units, the voltage at a resistor 60 of the third unit is applied to comparators 45, 55, 76 of the other units; and the voltage at a resistor 70 of the fourth unit is applied to comparators 46, 56, 66 of the other units. The outputs of comparators 44—46, 54—56, 64—66 and 74—76 are applied through diodes 78—81 respectively to the base of a transistor 82, which corresponds to the switch element 33, the emitter of which is grounded, and the collector of which is connected to the slip indication lamp 28.

In operation, when four-wheel drive is selected by operating the selection lever 9, engine power is transmitted to the front and rear wheels 2, 3, 4, 5 through shaft 13, propeller shaft 10 and axles 12, 15. When the wheels 2—5 begin to rotate, magnets 23 of each speed detector rotate with the respective axles. Because of the rotation of magnets 23, the respective reed switch 26, 48, 58, 68 of each speed detector is turned on and off and a pulse train is generated to cause voltage variation at the output of each integrating circuit in dependency on the number of reversals of the switch. A voltage depending on the wheel speed of each wheel is applied to each of comparators 44—46, 54—56, 64—66 and 74—76. As long as all wheels rotate at the same speed, the voltages of capacitors 41, 51, 61, 71 are substantially equal to each other. Thus, each comparator of each unit is supplied at its non-inverting input with a voltage lower than the voltage at the inverting input, so that the output of the comparator is negative. Thus, transistors 47, 57, 67, 77 (as the switches 34, 35, 36, 37) remain off, and none of the slipping wheel indicating lamps 29—32 and slip indicating lamp (28) is turned on.

If for example the front wheel 2 slips, the wheel speed increases rapidly. Thus, the terminal voltage of capacitor 41 of the integrating circuit rises and the voltage applied to the non-inverting inputs of comparators 44—46 becomes higher than inverting terminal voltages derived from the other capacitors 51, 61, 71. Accordingly, comparators 44—46 produce positive outputs causing transistor 47 to be turned on and slipping wheel indicating lamp 29 is illuminated to indicate slipping of the front wheel 2. Similarly, the output from comparators 44—46 turns on the transistor 82 through diode 78 to illuminate the slip indicating lamp 28 to notify that one of the wheels is slipping. The operation is similar when slip of any of the other wheels 3—5 occurs. Accordingly, the driver is advised when wheel-slip occurs and which wheel is slipping. Remedial action can then be taken, e.g. by changing the position of the passengers or the load in the vehicle, to prevent further wheel slipping.

By the arrangement described, the driver is alerted as to which wheel is slipping so that the vehicle can be moved over a snow-covered, muddy or other slippery road.

**Claims**

1. A wheel slip indicating system for a four-wheel drive vehicle, comprising: a speed detector (16 to 19) for each wheel for detecting the speed of the wheels (2 to 5) individually, comparator means for producing outputs in accordance with detected speed differences, and switch units adapted to be controlled by those outputs, characterised by a number of comparators (44—46; 54—56; 64—66; 74—76) for each driven wheel equal to the number of the further driven wheels, each comparator receiving the signal of the respective wheel and of one of the further wheels, a switch unit (34—37) for each wheel adapted to be closed by the outputs of each of the respective comparators, and indicators (29—32) adapted to be operated on closing of the switch units (34—37).

2. A wheel slip indicating system for a four-wheel drive vehicle in accordance with claim 1, wherein each speed detector (16, 17, 18, 19) comprises a pulse generator (Figure 2) for producing pulses at a rate proportional to the wheel speed, and for each wheel there is an integrating circuit (40, 41; 50, 51; 60, 61; 70, 71) for integrating the pulses, and the comparators (44—46; 54—56; 64—66; 74—76) compare the output of each integrating circuit with the outputs of each of the integrating circuits for the other wheels.

3. A wheel slip indicating system as claimed in claim 1 or 2, wherein one of the indicators (28) is arranged to indicate slippage of any of the wheels (2 to 5) and the other indicators (29—32) are arranged to indicate slippage of a respective one of the wheels (2 to 5).

**Patentansprüche**

1. System zur Anzeige des Radschlupfes für ein Fahrzeug mit Vierradantrieb, mit einem Geschwindigkeitsdetektor (16 bis 19) für jedes Rad zur individuellen Feststellung der jeweiligen Geschwindigkeit der Räder (2 bis 5), Vergleichsmitteln zur Erzeugung von Ausgangssignalen in Abhängigkeit von abgetasteten Geschwindigkeitsdifferenzen, und mit Schalteinheiten, die von diesen Ausgangssignalen gesteuert sind, gekennzeichnet durch eine Zahl von Vergleichern (44—46; 54—56; 64—66; 74—76) für jedes angetriebene Rad, die gleich der Zahl der weiteren angetriebenen Räder ist, wobei jeder Vergleicher das Signal von dem jeweiligen Rad und von einem der weiteren Räder empfängt, durch eine Schalteinheit (34—37) für jedes Rad, die durch die Ausgangssignale jeder der entsprechenden Vergleicher geschlossen wird, und durch Indikatoren (29—32), die beim Schließen der Schalteinheiten (34—37) betätigt werden.

2. System nach Anspruch 1, dadurch gekennzeichnet, daß jeder Geschwindigkeitsdetektor (16, 17, 18, 19) einen Pulsgenerator (Fig. 2) zur Erzeugung von Impulsen mit einer Impulsfolgefrequenz proportional der Radgeschwindigkeit aufweist, und daß für jedes Rad ein Integrationskreis (40, 41; 50, 51; 60, 61; 70, 71) zur Integration der Impulse vorgesehen ist, wobei die Vergleicher (44—46; 54—56; 64—66; 74—76) das Ausgangssignal jedes Integrationskreises mit den Ausgangssignalen von jedem der Integrationskreise für die anderen Räder vergleichen.

3. System nach Anspruch 1 oder 2, dadurch gekennzeichnet, daß einer der Indikatoren (28) den Schlupf irgendeines der Räder (2 bis 5) und die anderen Indikatoren (29—32) den Schlupf eines entsprechenden der Räder (2 bis 5) anzeigt.

**Revendications**

1. Système indicateur de patinage pour un véhicule à quatre roues motrices qui comprend un détecteur de vitesse (16 à 19) pour chaque roue afin de déterminer individuellement la vitesse des roues (2 à 5), des moyens pour produire des signaux de sortie en accord avec les différences de vitesses constatées et des ensembles de commutation adaptés à être commandés par ces signaux, caractérisé en ce qu'il comprend un certain nombre de comparateurs (44—46, 54—56, 64—66, 74—76), nombre égal à celui des roues motrices, chaque comparateur recevant le signal de la roue correspondante et de l'une des autres roues, un ensemble de commutation (34—37) pour chaque roue adapté à être fermé par les signaux de sortie du comparateur correspondant, et des indicateurs (29—32) adaptés à être actionnés par la fermeture des ensembles de commutation (34—37).

2. Système indicateur de patinage pour un véhicule à quatre roues motrices selon la revendication 1, caractérisé en ce que chacun des détecteurs de vitesse (16, 17, 18 et 19) comprend un générateur (Figure 2) produisant des impulsions à une cadence proportionnelle à la vitesse de la roue, et en ce que, pour chaque roue est prévu un circuit (40, 41; 50, 51; 60, 61; 70, 71) pour intégrer ces impulsions, les comparateurs (44—46; 54—56; 64—66; 74—76) comparant les signaux de sortie de chaque circuit d'intégration avec ceux de chacun des circuits d'intégration des autres roues.

3. Système indicateur de patinage selon la revendication 1 ou 2, caractérisé en ce que l'un des indicateurs (28) est conçu pour indiquer le patinage de n'importe laquelle des roues (2 à 5), tandis que les autres indicateurs (29—32) sont conçus pour indiquer le patinage de l'une seulement des roues (2 à 5).

# FIG. 1

FIG. 2

FIG. 3

0 053 033

FIG. 4